# EUROPEAN PATENT APPLICATION

(11) **EP 4 625 571 A1**
(43) Date of publication of application: **01.10.2025**
(21) Application number: 23893591.0
(22) Date of filing: 31.10.2023
(51) Int. Cl.: H01M 10/0525, H01M 10/058, H01M 10/0566

(54) **ENERGY STORAGE APPARATUS, ENERGY STORAGE SYSTEM, AND ELECTRIC DEVICE**

(30) Priority: 26.11.2022 CN 202211494881
(71) Applicant: Xiamen Hithium Energy Storage Technology Co., Ltd., Xiamen, Fujian 361100 (CN)
(72) Inventor: LIAO, Ying, Xiamen, Fujian 361100 (CN)
(74) Representative: RGTH
(86) International application number: PCT/CN2023/128849
(87) International publication number: WO 2024/109500

(57) **Abstract**

The present invention relates to an energy storage apparatus, an energy storage system, and an electric device. The energy storage apparatus provided in the present application comprises an electrolytic solution, a positive electrode sheet, a separator, and a negative electrode sheet; the kinetic factor α of the electrolytic solution satisfies the formula: α = k1 × ε × InD + k2 × σ × T / 100C, and the kinetic factor α of the electrolytic solution satisfies: -10 ≤ α ≤ 30, wherein ε is the viscosity of the electrolytic solution, D is the diffusion coefficient of electrolyte cations in the electrolytic solution, σ is the electrical conductivity of the electrolytic solution, T is the thermodynamic temperature of the electrolytic solution, C is the molar concentration of an electrolyte, k1 is the viscosity correction coefficient of the electrolytic solution, and k2 is the electrical conductivity correction coefficient of the electrolytic solution; the positive electrode sheet is at least partially immersed in the electrolytic solution; the separator is arranged on one side of the positive electrode sheet and is at least partially immersed in the electrolytic solution; the negative electrode sheet is arranged on the side of the separator facing away from the positive electrode sheet, and is at least partially immersed in the electrolytic solution. The energy storage apparatus has good rate performance, cycle performance and low-temperature performance.

## Description

The present application claims priority from Chinese Patent Application No. 2022114948818, filed with the Chinese Patent Office on November 26, 2022, entitled "Energy Storage Apparatus, Energy Storage System and Electric Device", the entire contents of which are incorporated herein by reference.

### Technical Field

The present application relates to the technical field of batteries, and specifically relates to an energy storage apparatus, an energy storage system and an electric device.

### Background

With the ongoing development in the lithium ion battery technology, lithium ion batteries, in comparison with other types of batteries such as lead acid and cadmium nickel batteries, have the advantages such as large specific capacity, no memory effect, high working voltage, fast charging speed, wide range of working temperature, long cycling service life, small volume and light weight. At present, lithium ion batteries are widely utilized, which not only requires lithium ion batteries to have larger capacity, but also puts forward higher requirements on the energy density, the charging/discharging efficiency and the cycling stability of lithium ion batteries.

An additive may be added into the electrolytic solution so that when a film is formed on the solid phase interface between the electrode material and the electrolytic solution, the additive can modify the formed interface layer, thereby reducing the impedance, which in turn improves the conductivity, cycling and rate performances of the battery. However, all the currently used additives are unconventional additives, and high costs of the additives lead to higher production cost of the batteries.

### Summary of the Invention

In view of the above, the present application provides an energy storage apparatus. By controlling the kinetic factor of the energy storage apparatus, the energy storage apparatus has good rate performance, cycling performance and low-temperature performance.

In a first aspect, the present application provides an energy storage apparatus, which comprises an electrolytic solution, a positive electrode sheet, a separator and a negative electrode sheet, wherein the electrolytic solution has a kinetic factor α satisfying the following formula: α = k1 × ε × InD + k2 × σ × T / 100C; the kinetic factor α of the electrolytic solution is in the range of -10 ≤ α ≤ 30, ε is viscosity of the electrolytic solution, D is diffusion coefficient of electrolyte cations in the electrolytic solution, σ is conductivity of the electrolytic solution, T is thermodynamic temperature of the electrolytic solution, C is molar concentration of electrolyte in the electrolytic solution, k1 is viscosity correction coefficient of the electrolytic solution, k2 is conductivity correction coefficient of the electrolytic solution; the positive electrode sheet is at least partially immersed in the electrolytic solution; the separator is arranged on one side of the positive electrode sheet and at least partially immersed in the electrolytic solution; the negative electrode sheet is arranged on a side of the separator facing away from the positive electrode sheet and at least partially immersed in the electrolytic solution.

In a second aspect, the present application provides an energy storage system, which comprises a box and a plurality of the energy storage apparatuses provided in the present application contained in said box. The energy storage apparatuses are electrically connected and the mode of the electric connection of the energy storage apparatuses includes at least one of series connection and parallel connection. Since the energy storage system of the application comprises energy storage apparatuses with excellent dynamic performance, the energy storage system also has excellent dynamic performance.

In a third aspect, the present application provides an electric device, wherein said electric device comprises an electric device body and an energy storage apparatus provided in the present application, the electric device body comprises a positive electrode and a negative electrode; the positive electrode sheet of the energy storage apparatus is electrically connected with the device positive electrode of the electric device body; the negative electrode sheet of the energy storage apparatus is electrically connected with the device negative electrode of the electric device body; the energy storage apparatus is used for supplying power to the electric device body. Since the electric device is powered by the energy storage apparatus with excellent dynamic performance, the electric device can work stably.

In the energy storage apparatus provided in the present application, the dynamic performance of the energy storage apparatus may be affected by various factors such as the viscosity, the conductivity and the thermodynamic temperature of the electrolytic solution. In the energy storage apparatus provided in embodiments of the present application, by controlling the kinetic factor α of the electrolytic solution to satisfy the formula: α = k1 × ε × InD + k2 × σ × T / 100C, the influences of the viscosity, the conductivity, the diffusion coefficient of electrolyte cations and the thermodynamic temperature of the electrolytic solution can be considered comprehensively, so that electrolyte cations in the electrolytic solution can be efficiently intercalated and deintercalated, and therefore the energy storage apparatus has good rate performance, cycling performance and low-temperature performance. When the kinetic factor α of the electrolytic solution is within the range of from -10 to 30, electrolyte cations in the electrolytic solution can be efficiently intercalated and deintercalated, and the energy storage apparatus can be efficiently charged and discharged without lithium precipitation, so that the energy storage apparatus has good rate performance, cycling performance and low-temperature performance.

### Brief Description of the Drawings

In order to more clearly illustrate the technical solution of the embodiments of the present application, the drawings to be used in the embodiments will be briefly described below. Apparently, the drawings described below are some embodiments of the present application, and other drawings can be obtained by a person skilled in the art from these drawings without inventive work.
Fig. 1 is a schematic illustration of the structure of an energy storage apparatus according to an embodiment of the present application.
Fig. 2 is a sectional view of the structure of the energy storage apparatus according to an embodiment of the present application along the A-A direction shown in Fig. 1.
Fig. 3 is a schematic illustration of the structure of positive electrode sheet/negative electrode sheet according to an embodiment of the present application.
Fig. 4 is a sectional view of the structure of the positive electrode sheet/negative electrode sheet according to an embodiment of the present application along the B-B direction shown in Fig. 3.
Fig. 5 shows the test results of the capacity retention rate of the energy storage apparatus according to an embodiment of the present application at 298.15K/1C.
Fig. 6 shows the test results of the capacity retention rate of the energy storage apparatus according to an embodiment of the present application at 318.15K/1C.
Fig. 7 shows the test results of the capacity retention rate of the energy storage apparatus according to an embodiment of the present application at 253.15K/1C.
Fig. 8 shows the test results of the capacity retention rate of the energy storage apparatus according to an embodiment of the present application at 298.15K/3C.
Fig. 9 shows the test results of the capacity retention rate of the energy storage apparatus according to another embodiment of the present application at 298.15K/1C.
Fig. 10 shows the test results of the capacity retention rate of the energy storage apparatus according to another embodiment of the present application at 318.15K/1C.
Fig. 11 is a schematic illustration of the structure of an energy storage system according to an embodiment of the present application.
Fig. 12 is a schematic illustration of the structure of an electric device according to an embodiment of the present application.

Description of reference numbers:
100 - energy storage apparatus, 110 - electrolytic solution, 130 - positive electrode sheet, 131 - positive electrode active material layer, 133 - positive electrode current collector, 140 - separator, 150 - negative electrode sheet, 151 - negative electrode active material layer, 153 - negative electrode current collector, 200 - energy storage system, 210 - box, 300 - electric device, 310 - electric device body, 311 - device positive electrode, 313 - device negative electrode.

### Specific Embodiments

In the following, the technical solutions in the embodiments of the present application will be clearly and completely described with reference to the drawings in the embodiments of the present application. Apparently, the described embodiments are only a part, not all, of the embodiments of the present application. Based on the embodiments of the present application, all other embodiments obtainable by a person skilled in the art without any inventive work belong to the scope of the present application.

The terms "first", "second" and so on are used in the Description and Claims of the present application and in the above drawings only to distinguish different objects, and not to describe a particular order. In addition, the terms "comprising" and "having" and any variations thereof are intended to be inclusive, not exclusive. For example, a process, method, system, product or device comprising a series of steps or units is not limited to the listed steps or units, but optionally further comprises steps or units not listed, or optionally further comprises other steps or units inherent to the process, method, product or device.

The reference herein to "embodiment" or "embodiments" means that the particular features, structures or characteristics described in connection with the embodiment or embodiments may be included in at least one embodiment of the present application. The appearance of the phrase at various locations in the description does not necessarily mean the same embodiment, nor is it an independent or alternative embodiment that is mutually exclusive with other embodiments. A person skilled in the art will understand explicitly and implicitly that an embodiment described herein may be combined with other embodiments.

With the ongoing development of lithium ion batteries in the fields of consumption electronics and electric vehicles, lithium ion batteries are required to have larger capacity, and higher and higher requirements are put forward on the energy density, the charging/discharging efficiency and the cycling stability of lithium ion batteries. An additive may be added into the electrolytic solution so that when a film is formed on the solid phase interface between the electrode material and the electrolytic solution, the additive can modify the formed interface layer, thereby reducing the impedance and improving the conductivity, cycling and rate performances of the battery. However, all the currently used additives are unconventional additives, and high costs of the additives leads to higher production cost of the batteries.

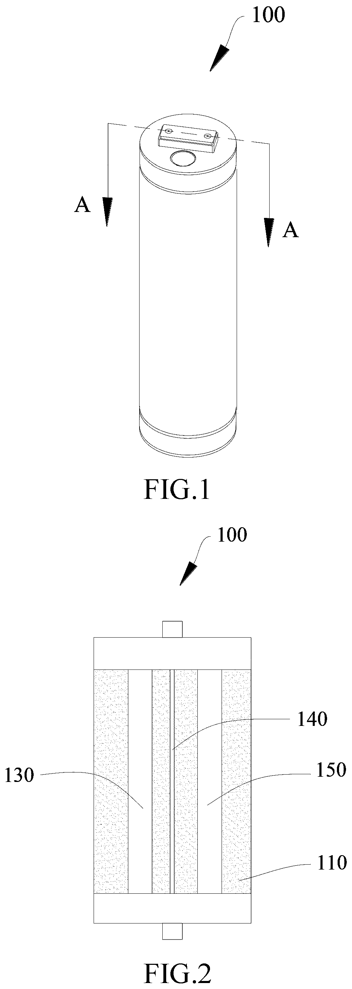

Referring to Fig. 1 and Fig. 2, the present application provides an energy storage apparatus 100, which comprises an electrolytic solution 110, a positive electrode sheet 130, a separator 140 and a negative electrode sheet 150. The electrolytic solution 110 has a kinetic factor α satisfying the formula: α = k1 × ε × InD + k2 × σ × T / 100C; wherein the kinetic factor α of the electrolytic solution is in the range of g -10 ≤ α ≤ 30, ε is viscosity of the electrolytic solution 110, D is diffusion coefficient of electrolyte cations in the electrolytic solution 110, σ is conductivity of the electrolytic solution 110, T is thermodynamic temperature of the electrolytic solution 110, C is molar concentration of the electrolyte in electrolytic solution 110, k1 is viscosity correction coefficient of the electrolytic solution 110, and k2 is conductivity correction coefficient of the electrolytic solution 110. The positive electrode sheet 130 is at least partially immersed in the electrolytic solution 110. The separator 140 is disposed on one side of the positive electrode sheet 130, and is at least partially immersed in the electrolytic solution 110. The negative electrode sheet 150 is disposed on a side of the separator 140 facing away from the positive electrode sheet 130 and is at least partially immersed in the electrolytic solution 110.

It can be understood that the positive electrode sheet 130, the separator 140 and the negative electrode sheet 150 are sequentially arranged. The positive electrode sheet 130, the separator 140 and the negative electrode sheet 150 may be sequentially contacted and laminated, or sequentially spaced and laminated.

In a specific embodiment, the positive electrode sheet 130, the separator 140 and the negative electrode sheet 150 are sequentially laminated and then wound or bent to match the shape of the final energy storage apparatus 100. It can be understood that the shape of the energy storage apparatus 100 of the present application may be cylindrical, rectangular or the like. In the drawings of the present application, a cylindrical structure is shown as an example. However, this should not be construed as limiting the energy storage apparatus 100 of the present application.

Optionally, the separator 140 may be, but is not limited to, at least one of a polypropylene (PP) membrane and a polyethylene (PE) membrane.

In an embodiment of the present application, the energy storage apparatus 100 may be, but is not limited to, a lithium ion secondary energy storage apparatus 100, a lithium ion primary energy storage apparatus 100, a lithium-sulfur energy storage apparatus 100, or a sodium-lithium ion energy storage apparatus 100.

Optionally in some embodiments, the energy storage apparatus 100 is a single battery. In some other embodiments, the energy storage apparatus 100 comprises a plurality of batteries, which are stacked together. The mode of the electric connection of the plurality of batteries is at least one of series connection and parallel connection. In other words, the energy storage apparatus 100 is an assembly of a plurality of batteries electrically connected in series, in parallel or combination thereof. Optionally, each battery includes an electrolytic solution 110, a positive electrode sheet 130, a separator 140 and a negative electrode sheet 150.

Optionally, the value of the kinetic factor α of the electrolytic solution 110 may be, but is not limited to, -10, -8, -7, -4, 0, 1, 4, 9, 12, 15, 18, 22, 24, 27, or 30. When the kinetic factor α of the electrolytic solution 110 in in the range of -10 ≤ α ≤ 30, the viscosity, the conductivity, the diffusion coefficient of electrolyte cations and the thermodynamic temperature of the electrolytic solution 110 are within reasonable ranges, and electrolyte cations in the electrolytic solution 110 can be efficiently deintercalated and intercalated, so that the electrolytic solution 110 has high capacity retention rate and cycling and rate performances. When the kinetic factor α of the electrolytic solution 110 is greater than 30, the conductivity of the electrolytic solution 110 is too high, but the molar concentration of the electrolyte in the electrolytic solution 110 is too low, and the total amount of the electrolyte in the electrolytic solution 110 of the energy storage apparatus 100 is insufficient. As a result, the molar concentration of the electrolyte in the electrolytic solution 110 becomes lower after the energy storage apparatus 100 is charged and discharged for a plurality of times, thereby affecting the cycling performance of the energy storage apparatus 100. When the kinetic factor α of the electrolytic solution 110 is less than -10, the viscosity and the molar concentration of the electrolyte in the electrolytic solution 110 are too high, but the conductivity of the electrolytic solution 110 is too low, and the migration speed of electrolyte cations in the energy storage apparatus 100 is too low, so that electrolyte cations deintercalated from the positive electrode cannot be intercalated into the negative electrode in time, thereby leading to lithium precipitation in the energy storage apparatus 100, which accelerates the capacity fading of the energy storage apparatus 100.

It will be understood that the viscosity of the electrolytic solution 110 may affect the migration speed of electrolyte cations. A viscosity correction coefficient k1 of the electrolytic solution 110 is used to correct the viscosity of the electrolytic solution 110, so that the kinetic factor α of the electrolytic solution 110 falls within a reasonable range. The conductivity of the electrolytic solution 110 may also affect the migration speed of electrolyte cations. A conductivity correction coefficient k2 of the electrolytic solution 110 is used to correct the conductivity of the electrolytic solution 110, so that kinetic factor α of the electrolytic solution 110 falls within a reasonable range.

In the energy storage apparatus 100 according to an embodiment of the present application, the dynamic performance of the energy storage apparatus may be affected by various factors such as the viscosity, the conductivity and the thermodynamic temperature of the electrolytic solution. In the energy storage apparatus 100 provided according to an embodiment of the present application, by controlling the kinetic factor α of the electrolytic solution to satisfy the formula: α = k1 × ε × InD + k2 × σ × T / 100C, the influences of the viscosity, the conductivity, the diffusion coefficient of electrolyte cations and the thermodynamic temperature of the electrolytic solution 110 can be considered comprehensively, so that electrolyte cations in the electrolytic solution 110 can be efficiently intercalated and deintercalated, and therefore the energy storage apparatus 100 has good rate performance, cycling performance and low-temperature performance. When the kinetic factor α of the electrolytic solution is within the range of from -10 to 30, electrolyte cations in the electrolytic solution 110 can be efficiently intercalated and deintercalated, and the energy storage apparatus 100 can be efficiently charged and discharged without lithium precipitation, so that the energy storage apparatus 100 has good rate performance, cycling performance and low-temperature performance.

In some embodiments of the present application, the electrolytic solution 110 has a thermodynamic temperature T in a range of 243.15K ≤ T ≤ 333.15K. Specifically, the thermodynamic temperature T of the electrolytic solution110 may be, but is not limited to, 243.15K, 245K, 253.15K, 258.15K, 263.28K, 272.36K, 284.37K, 291.98K, 298.15K, 301.28K, 315.29K, 318.15K, 324.69K, or 333.15K.

In an embodiment of the present application, when the thermodynamic temperature T of the electrolytic solution 110 is in the range of 243.15K ≤ T ≤ 333.15K, electrolyte cations in the electrolytic solution 110 can be efficiently deintercalated and intercalated between the positive electrode sheet 130 and the negative electrode sheet 150, and the energy storage apparatus 100 has high capacity retention rate and cycling and rate performances. When the thermodynamic temperature T of the electrolytic solution 110 is greater than 333.15K, the temperature of the electrolytic solution 110 is too high, which may accelerate the oxidation and damage of the separator 140, and shorten the service life of the energy storage apparatus 100. When the thermodynamic temperature T of the electrolytic solution 110 is lower than 243.15K, the temperature of the electrolytic solution 110 is too low, and the conductivity of the electrolytic solution 110 is too low, so that electrolyte cations deintercalated from the positive electrode sheet 130 are difficult to be intercalated into the negative electrode sheet 150 in time, thereby leading to lithium precipitation in the energy storage apparatus 100, which accelerates the capacity fading of the energy storage apparatus 100.

The composition of the solvent directly affects the viscosity of the electrolytic solution 110. Therefore, the value of the viscosity correction coefficient k1 of the electrolytic solution 110 depends on the components of the solvent and contents thereof. When the components of the solvent or contents thereof change, the viscosity correction coefficient k1 of the electrolytic solution 110 will also change. However, when the components of the solvent or contents thereof become definite, the viscosity correction coefficient k1 of the electrolytic solution 110 will be relatively definite.

In an embodiment of the present application, the electrolytic solution 110 has a viscosity correction coefficient k1 in the range of 100 Pa·m² ≤ k1 ≤ 1000 Pa·m²; specifically, the viscosity correction coefficient k1 of the electrolytic solution 110 may be, but is limited to, 100 Pa·m², 150 Pa·m², 240 Pa·m², 360 Pa·m² , 450 Pa·m² , 560 Pa·m² , 670 Pa·m², 750 Pa·m², 870 Pa·m², 1000 Pa·m². When the viscosity correction coefficient k1 of the electrolytic solution 110 is in the range of 100 Pa·m² ≤ k1 ≤ 1000 Pa·m², the viscosity of the electrolytic solution 110 can be corrected, so that the kinetic factor α of the electrolytic solution 110 is within a reasonable range, which helps to detect the effect of the kinetic factor α on the rate performance and cycling performance of the energy storage apparatus 100, and to increase the calculation precision of the kinetic factor α. On the other hand, the contents of the components in the electrolytic solution 110 have a relatively greater influence on the viscosity of the electrolytic solution 110. Accordingly, when the contents of the components in the electrolytic solution 110 change greatly, the viscosity correction coefficient k1 of the electrolytic solution 110 will also change greatly.

Optionally, before the formation of the energy storage apparatus 100, the viscosity correction coefficient k1 of the electrolytic solution 110 is in the range of 100 Pa·m² ≤ k1 ≤ 800 Pa·m²; specifically, the viscosity correction coefficient k1 of the electrolytic solution 110 may be, but is not limited to, 100 Pa·m², 150 Pa·m², 240 Pa·m² , 360 Pa·m², 450 Pa·m², 560 Pa·m² , 670 Pa·m² , 750 Pa·m², or 800 Pa·m². When the viscosity correction coefficient k1 of the electrolytic solution 110 is in the range of 100 Pa·m² ≤ k1 ≤ 800 Pa·m², the viscosity of the electrolytic solution 110 before the formation of the energy storage apparatus 100 can be corrected, so that the kinetic factor α of the electrolytic solution 110 is within a reasonable range, which helps to detect the effect of the kinetic factor α on the rate performance and cycling performance of the energy storage apparatus 100.

Optionally, after the formation of the energy storage apparatus 100, the viscosity correction coefficient k1 of the electrolytic solution 110 is in the range of 300 Pa·m² ≤ k1 ≤ 1000 Pa·m²; specifically, the viscosity correction coefficient k1 of the electrolytic solution 110 may be, but is not limited to, 300 Pa·m² , 340 Pa·m² , 360 Pa·m² , 450 Pa·m², 560 Pa·m² , 670 Pa·m² , 750 Pa·m², 800 Pa·m², 850 Pa·m², 950 Pa·m², or 1000 Pa·m². Some of the electrolytic solution 110 may be lost during the formation of the energy storage apparatus 100, rendering great changes in the contents of the components in the electrolytic solution 110, and changes in the viscosity and also the viscosity correction coefficient k1 of the electrolytic solution 110. When the viscosity correction coefficient k1 of the electrolytic solution 110 is in the range of 300 Pa·m² ≤ k1 ≤ 1000 Pa·m², the viscosity of the electrolytic solution 110 after the formation of the energy storage apparatus 100 can be corrected, so that the kinetic factor α of the electrolytic solution 110 is within a reasonable range, which helps to detect the effect of the kinetic factor α on the rate performance and cycling performance of the energy storage apparatus 100.

The type of electrolyte and the content of the component with a high dielectric constant in the electrolytic solution 110 directly affect the conductivity of the electrolytic solution 110. Accordingly, the value of the conductivity correction coefficient k2 of the electrolytic solution 110 depends on the type of electrolyte and the content of the component with a high dielectric constant in the electrolytic solution 110. Different types of electrolytes at the same concentration may lead to great difference in the conductivity of the electrolytic solution 110, and a small difference in the content of the component with a high dielectric constant may also lead to great difference in the conductivity of the electrolytic solution 110. Therefore, when the type of electrolyte or the content of the component with a high dielectric constant in the electrolytic solution 110 changes, the conductivity correction coefficient k2 of the electrolytic solution 110 will also change. However, when the type of electrolyte and the content of the component with a high dielectric constant in the electrolytic solution 110 become definite, the conductivity correction coefficient k2 of the electrolytic solution 110 will be relatively definite.

In some embodiments of the present application, the conductivity correction coefficient k2 of the electrolytic solution 110 is in the range of 0.2 K·mol/(s·cm²) ≤ k2 ≤ 2 K·mol/(s·cm²). Specifically, the conductivity correction coefficient k2 of the electrolytic solution 110 may be, but is not limited to, 0.2 K·mol/(s cm²), 0.3 K·mol/(s·cm²), 0.5 K·mol/(s·cm²), 0.8 K·mol/(s·cm²), 1.2 K·mol/(s cm²), 1.3 K·mol/(s·cm²), 1.5 K·mol/(s·cm²), 1.7 K·mol/(s·cm²), 1.9 K·mol/(s·cm²), or 2 K·mol/(s·cm²). When the conductivity correction coefficient k2 of the electrolytic solution 110 is in the range of 0.2 K·mol/(s·cm²) ≤ k2 ≤ 2 K·mol/(s cm²), the conductivity of the electrolytic solution 110 can be corrected, so that the kinetic factor α of the electrolytic solution 110 is within a reasonable range, which helps to detect the effect of the kinetic factor α on the rate performance and cycling performance of the energy storage apparatus 100, and to increase the calculation precision of the kinetic factor α. On the other hand, the conductivity of the electrolytic solution 110 is greatly affected by the type of electrolyte and the content of the component with a high dielectric constant in the electrolytic solution 110. Accordingly, when the type of electrolyte or the content of the component with a high dielectric constant in the electrolytic solution 110 changes greatly, the conductivity correction coefficient k2 of the electrolytic solution 110 will also change.

Optionally, before the formation of the energy storage apparatus 100, the conductivity correction coefficient k2 of the electrolytic solution 110 is in the range of 0.2 K·mol/(s·\cm²) ≤ k2 ≤ 1.6 K·mol/(s·cm²). Specifically, the conductivity correction coefficient k2 of the electrolytic solution 110 may be, but is not limited to, 0.2 K·mol/(s·cm²), 0.3 K·mol/(s·cm²), 0.5 K·mol/(s·cm²), 0.8 K·mol/(s·cm²), 1.2 K·mol/(s·cm²), 1.3 K·mol/(s·cm²), 1.5 K·mol/(s·cm²), or 1.6 K·mol/(·cm²). When the conductivity correction coefficient k2 of the electrolytic solution 110 is in the range of 0.2 K·mol/(s·cm²) ≤ k2 ≤ 1.6 K·mol/(s·cm²), the conductivity of the electrolytic solution 110 before the formation of the energy storage apparatus 100 can be corrected, so that the kinetic factor α of the electrolytic solution 110 is within a reasonable range, which helps to detect the effect of the kinetic factor α on the rate performance and cycling performance of the energy storage apparatus 100.

Optionally, after the formation of the energy storage apparatus 100, the conductivity correction coefficient k2 of the electrolytic solution 110 is in the range of 0.5 K·mol/(s·cm²) ≤ k2 ≤ 2.0 K·mol/(s·cm²). Specifically, the conductivity correction coefficient k2 of the electrolytic solution 110 may be, but is not limited to, 0.5 K·mol/(s·cm²), 0.8 K·mol/(s·cm²), 1.2 K·mol/(s·cm²), 1.3 K·mol/(s cm²), 1.5 K·mol/(s cm²), 1.7 K·mol/(s cm²), 1.9 K·mol/(s cm²), or 2.0 K·mol/(s·cm²). Some of the electrolytic solution 110 may be lost during the formation of the energy storage apparatus 100, rendering great changes in the contents of the components in the electrolytic solution 110. When the content of the solvent with a high dielectric constant changes, the conductivity of the electrolytic solution 110 will also change. By changing the value of the conductivity correction coefficient k2 of the electrolytic solution 110, the conductivity correction coefficient k2 of the electrolytic solution 110 is in the range of 0.5 K·mol/(s·\cm²) ≤ k2 ≤ 2.0 K·mol/(s·cm²), which helps to correct the conductivity of the electrolytic solution 110, so that the kinetic factor α of the electrolytic solution 110 is within a reasonable range, which helps to detect the effect of the kinetic factor α on the rate performance and cycling performance of the energy storage apparatus 100.

In some embodiments, when the thermodynamic temperature T of the electrolytic solution 110 in the energy storage apparatus 100 is in the range of 243.15K ≤ T ≤ 333.15K, and the energy storage apparatus 100 is charged/discharged for a predetermined number of cycles at a predetermined cycling rate, the viscosity correction coefficient k1 of the electrolytic solution 110 is 500 Pa·m², the conductivity correction coefficient k2 of the electrolytic solution 110 is 1 K·mol/(s cm²), the predetermined number of cycles ranges from 500 to 10000, and the predetermined cycling rate ranges from 0.5C to 3C.

In the present application, the term "number of cycles" refers to the number of times that the energy storage apparatus 100 is charged at a predetermined rate and discharged at a predetermined rate. The process that the energy storage apparatus 100 finishes charging and discharging once is called a cycle. For example, when predetermined cycling rate is 1C and the predetermined number of cycles is 500, the energy storage apparatus 100 is charged and discharged 500 times at the cycling rate of 1C. As another example, when predetermined cycling rate is 3C and the predetermined number of cycles is 1500, the energy storage apparatus 100 is charged and discharged 1500 times at the cycling rate of 3C.

In an embodiment of the present application, the thermodynamic temperature T of the electrolytic solution 110 in the energy storage apparatus 100 is in the range of 243.15K ≤ T ≤ 333.15K, and the battery is charged/discharged for a predetermined number of cycles at a predetermined cycling rate, the viscosity correction coefficient k1 of the electrolytic solution 110 is 500 Pa·m², the conductivity correction coefficient k2 of the electrolytic solution 110 is 1 K·mol/(s cm²), and the viscosity correction coefficient k1 and the conductivity correction coefficient k2 are used for correcting the formula α = k1 × ε × InD + k2 × σ × T / 100C satisfied by the electrolytic solution 110, so that the kinetic factor α of the electrolytic solution 110 is within a reasonable range,, which helps to calculate the kinetic factor α of the electrolytic solution 110, and to detect the effect of the kinetic factor α on the dynamic performance of the energy storage apparatus 100. In an embodiment of the present application, the viscosity correction coefficient k1 of the electrolytic solution 110 is 500 Pa·m², the conductivity correction coefficient k2 of the electrolytic solution 110 is 1 K·mol/(s·cm²), and when the kinetic factor α of the electrolytic solution 110 is in the range of -10 ≤ α ≤ 30, the energy storage apparatus 100 has good cycling stability and rate performance. When the kinetic factor α of the electrolytic solution 110 is higher than 30 or lower than -10, the energy storage apparatus 100 has poor cycling stability and rate performance.

Optionally, the number of cycles of the energy storage apparatus 100 may be, but is not limited to, 500, 600, 800, 1000, 1500, 2500, 3500, 5000, 6500, 7800, 8600, 9500, or 10000.

Optionally, the cycling rate of the energy storage apparatus 100 may be, but is not limited to, 0.5C, 0.8C, 1C, 1.5C, 2C, 2.5C, or 3C.

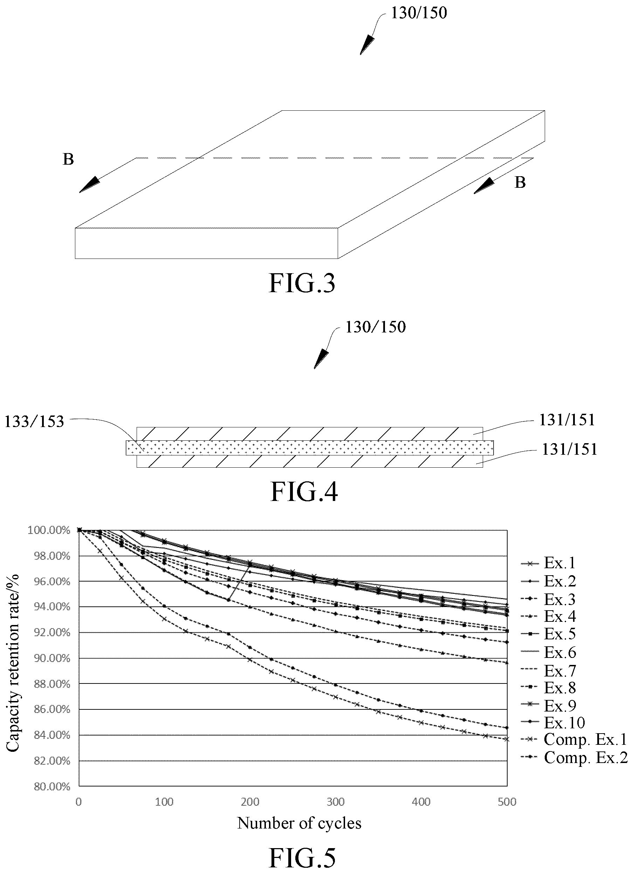

Referring to Fig. 3 and Fig. 4, optionally in some embodiments, the positive electrode sheet 130 comprises a positive electrode current collector 133, and a positive electrode active material layer 131 covering a surface of the positive electrode current collector 133. The positive electrode current collector 133 may be, but is not limited to, an aluminum sheet.

In some embodiments, the positive electrode active material layer 131 comprises a positive electrode active material, a first binder, and a first conductive agent. The positive electrode active material is used for deintercalating or intercalating electrolyte cations in the charging/discharging process. The first binder is used for binding with the positive electrode active material and the first conductive agent, so that the positive electrode active material layer 131 is denser. In addition, when the positive electrode active material layer 131 covers the surface of the positive electrode current collector 133, the first binder helps to improve the binding strength between the positive electrode active material layer 131 and the positive electrode current collector 133, thereby enhancing the electric contact between the positive electrode active material layer 131 and the positive electrode current collector 133, so as to better stabilize the structure of the positive electrode sheet 130. Furthermore, the first binder can improve the viscosity and dispersity of the positive electrode slurry formed by the positive electrode active material, the first conductive agent and the first binder, and helps to improve the energy density of the positive electrode sheet 130. The first conductive agent endows the positive electrode sheet 130 with good charging/discharging performance, reduces the contact resistance of the positive electrode sheet 130, and accelerates the moving of the electrons, thereby improving the charging/discharging efficiency of the positive electrode sheet 130.

Optionally, the positive electrode active material comprises one or more of a transition metal oxide, a polyanionic compound, an organic polymer, and a Prussian blue material.

Optionally, the first binder may be, but is not limited to, polyvinylidene fluoride (PVDF), polytetrafluoroethylene (PTFE), polyacrylonitrile (PAN), or polyacrylic acid (PAA).

Optionally, the first conductive agent may be, but is not limited to, acetylene black, conductive carbon black, carbon nanotubes, carbon fibers, or graphene.

Optionally in some embodiments, the negative electrode sheet 150 comprises a negative electrode current collector 153 and a negative electrode active material layer 151 covering a surface of the negative electrode current collector 153. The negative electrode current collector 153 may be, but is not limited to, a copper sheet.

In some embodiments, the negative electrode active material layer 151 comprises a negative electrode active material, a second binder, a second conductive agent, and a thickening agent. The negative electrode active material is used for intercalating or deintercalating electrolyte cations in the charging/discharging process. The second binder is used for binding with the negative electrode active material, the thickening agent and the second conductive agent, so that the negative electrode active material layer 151 is denser. In addition, when the negative electrode active material layer 151 covers the surface of the negative electrode current collector 153, the second binder helps to improve the binding strength between the negative electrode active material layer 151 and the negative electrode current collector 153, thereby better stabilizing the structure of the negative electrode sheet 150. The second conductive agent endows the negative electrode sheet 150 with good charging/discharging performance, reduces the contact resistance of the negative electrode sheet 150, and accelerates the moving of the electrons, thereby improving the charging/discharging efficiency of the negative electrode sheet 150. The thickening agent is used for improving the viscosity and the dispersity of the negative electrode slurry formed by the negative electrode active material, the second conductive agent and the second binder, which helps to provide more electrons, thereby improving the energy density of the negative electrode sheet 150.

Optionally, the negative electrode active material may be, but is not limited to, graphite, carbon fiber, or pyrolytic resin carbon.

Optionally, the second binder may be, but is not limited to, styrene-butadiene rubber (SBR), polyvinylidene fluoride (PVDF), polytetrafluoroethylene (PTFE), polyvinyl alcohol (PVA), polyacrylonitrile (PAN), polyacrylic acid (PAA), polyacrylate, carboxymethyl cellulose (CMC), or sodium alginate.

Optionally, the second conductive agent may be, but is not limited to, acetylene black, conductive carbon black, carbon nanotubes, carbon fibers, or graphene.

Optionally, the thickening agent may be, but is not limited to, sodium carboxymethyl cellulose (CMC).

In some embodiments of the present application, the electrolytic solution 110 comprises an electrolyte, a solvent and an additive.

The electrolytic solution 110 is a medium for electrolyte cation migration and charge transfer, and serves for conducting ions between the positive electrode sheet 130 and the negative electrode sheet 150 of the energy storage apparatus 100. The solvent in the electrolytic solution 110 is used for dissolving the electrolyte and the additive, providing more electrolyte cations for the electrolytic solution 110, thereby increasing the conductivity of the electrolytic solution 110. The electrolyte in the electrolytic solution 110, after being dissolved by the solvent, releases a large amount of electrolyte cations, which finally affects the charge/discharge rate and the capacity of the energy storage apparatus 100. The additive in the electrolytic solution 110 is used for improving the performance of electrolytic solution 110. When a film is formed at the solid phase interface between the electrode material and the electrolytic solution 110, the additive can modify the formed interface layer, so as to reduce the impedance, improve the conductivity, cycling and rate performances of the energy storage apparatus 100, avoid thermal runaway of the energy storage apparatus 100, prevent overcharging, and help to improve the stability and safety performance of the energy storage apparatus 100.

Optionally, the electrolyte comprises at least one of lithium hexafluorophosphate, lithium bis(trifluoromethylsulfonyl)imide, lithium difluorosulfonimide, lithium tetrafluoroborate, lithium bis(oxalate)borate and lithium difluorooxalateborate. By using these materials as the electrolyte, and after they are dissolved by the solvent, they release a large amount of electrolyte cations which migrate between the positive electrode sheet 130 and the negative electrode sheet 150, thereby realizing the charging/discharging process of the energy storage apparatus 100.

Optionally in some specific embodiments, the electrolyte cation in the electrolytic solution 110 is at least one of lithium ion and sodium ion.

Optionally, the solvent comprises at least one of dimethyl carbonate, diethyl carbonate, methyl ethyl carbonate, ethylene carbonate, propylene carbonate, methyl acetate, ethyl acetate, ethyl propionate, propyl propionate, ethyl butyrate, sulfolane and dimethyl sulfoxide. By using these substances as the solvent, it is possible to dissolve more electrolyte, so that the electrolytic solution 110 has higher conductivity and viscosity, which helps to improve the dynamic performance of the energy storage apparatus 100. When the solvent comprises two or more of the above materials, it helps to combine the properties of the various materials, so that the resulting electrolytic solution 110 has higher electrochemical stability and dynamic performance. For example, a mixed solvent resulted from mixing a solvent having a higher polarity and a solvent having a lower polarity has a higher conductivity, which helps to improve the charging/discharging performance of the energy storage apparatus 100.

Optionally, the additive comprises at least one of fluoroethylene carbonate, vinylene carbonate, ethylene sulfate, ethylene sulfite, tris(trimethylsilane)phosphate, tris(trimethylsilane)borate and 1,3-propanesultone. By using these materials as the additive, it helps to improve the performance of the electrolytic solution 110, helps to form an electrode protection film (the passivation film of the negative electrode sheet 150, and the passivation film of the positive electrode sheet 130), avoids thermal runaway of the energy storage apparatus 100, prevents overcharging, and helps to improve the stability and safety performance of the energy storage apparatus 100.

In some embodiments of the present application, the kinetic factor α of the electrolytic solution 110 is in the range of 0 ≤ α ≤ 15. Specifically, the kinetic factor α of the electrolytic solution 110 may be, but is not limited to, 0, 1, 3, 6, 8, 9, 10, 12, 14, or 15.

In an embodiment of the present application, when the kinetic factor α of the electrolytic solution 110 is in the range of 0 ≤ α ≤ 15, the electrolytic solution 110 has more suitable viscosity and conductivity, electrolyte cations in the electrolytic solution 110 have more suitable diffusion speed, and the temperature of the electrolytic solution 110 is also within a reasonable range, so that the resistance to the migration of electrolyte cations in the energy storage apparatus 100 is smaller, electrolyte cations in the electrolytic solution 110 can be more efficiently deintercalated and intercalated between the positive electrode sheet 130 and the negative electrode sheet 150, and the energy storage apparatus 100 has high capacity retention rate and cycling and rate performances. When the kinetic factor α of the electrolytic solution 110 is greater than 15, the conductivity of the electrolytic solution 110 is too high, while the molar concentration of the electrolyte in the electrolytic solution 110 is too low, and the total amount of the electrolyte in the electrolytic solution 110 of the energy storage apparatus 100 is too low, which results in that the molar concentration of the electrolyte in the electrolytic solution 110 is relatively low after the energy storage apparatus 100 is subjected to a plurality of charging and discharging processes, which in turn affects the cycling performance of the energy storage apparatus 100. When the kinetic factor α of the electrolytic solution 110 is lower than 0, the viscosity and the molar concentration of the electrolytic solution 110 are too high, while the conductivity of the electrolytic solution 110 is too low, and the migration speed of electrolyte cations in the energy storage apparatus 100 is too low, which results in that electrolyte cations deintercalated from the positive electrode cannot be intercalated into the negative electrode in time, thereby leading to light or moderate lithium precipitation in the energy storage apparatus 100, which in turn accelerates the capacity fading of the energy storage apparatus 100.

In some embodiments of the present application, the viscosity ε of the electrolytic solution 110 is in the range of 1.8 Pa's ≤ ε ≤ 2.5 Pa's. Specifically, the viscosity ε of the electrolytic solution 110 may be, but is not limited to, 1.8 Pa's, 1.9 Pa's, 2.0 Pa's, 2.1 Pa's, 2.2 Pa's, 2.3 Pa's, 2.4 Pa's, or 2.5 Pa's.

When the viscosity ε of the electrolytic solution 110 is in the range of 1.8 Pa·s ≤ ε ≤ 2.5 Pa's, the viscosity of the electrolytic solution 110 is within a reasonable range, so that the resistance to the migration of electrolyte cations in the electrolytic solution 110 is not too large to reduce the rate performance of the energy storage apparatus 100. In addition, the electrolytic solution 110 is not prone to evaporation, and the energy storage apparatus 100 has good safety performance. When the viscosity ε of the electrolytic solution 110 is greater than 2.5 Pa's, the viscosity of the electrolytic solution 110 is too high, which increases the resistance to the migration of electrolyte cations in the electrolytic solution 110, thereby reducing the speed of electrolyte cations moving between the positive electrode sheet 130 and the negative electrode sheet 150, which in turn reduces the rate performance of the energy storage apparatus 100. When the viscosity ε of the electrolytic solution 110 is lower than 1.8 Pa·s, the viscosity of the electrolytic solution 110 is too low, and the surface tension of the electrolytic solution 110 is too low. In addition, the electrolytic solution 110 is prone to evaporation, and the positive electrode sheet 130, the negative electrode sheet 150 and the separator 140 fail to be sufficiently wetted by the electrolytic solution 110, which in turn increases the resistance to the migration of the active cations in the electrolytic solution 110, and at the same time affects the safety performance of the energy storage apparatus 100.

In some embodiments of the present application, the diffusion coefficient D of electrolyte cations in the electrolytic solution 110 is in the range of -25 m²/s ≤ InD ≤ -18 m²/s. Specifically, the value of InD may be, but is not limited to, -25 m²/s, -24 m²/s, -23 m²/s, -22 m²/s, -21 m²/s, -20 m²/s, -19 m²/s, or -18 m²/s.

When the diffusion coefficient D of electrolyte cations in the electrolytic solution 110 is in the range of -25 m²/s ≤ lnD ≤ -18 m²/s, the diffusion coefficient of electrolyte cations in the electrolytic solution 110 is within a reasonable range, so that electrolyte cations in the electrolytic solution 110 can be intercalated into the negative electrode sheet 150 after being deintercalated from the positive electrode sheet 130, thereby improving the charging/discharging efficiency of the energy storage apparatus 100. When the diffusion coefficient D of electrolyte cations in the electrolytic solution 110 is in the range of InD > -18 m²/s, the diffusion coefficient of electrolyte cations in the electrolytic solution 110 is too high, and the molar concentration of the electrolyte in the electrolytic solution 110 is too high, which will in turn increase the production cost of the energy storage apparatus 100. When the diffusion coefficient D of electrolyte cations in the electrolytic solution 110 is in the range of InD < -25 m²/s, the diffusion coefficient of electrolyte cations in the electrolytic solution 110 is too low, and the molar concentration of the electrolyte in the electrolytic solution 110 is too low, which means that the amount of electrolyte cations in the electrolytic solution 110 is too low, which in turn reduces the conductivity of the electrolytic solution 110, so that electrolyte cations deintercalated from the positive electrode cannot be intercalated into the negative electrode in time, which leads to lithium precipitation in the energy storage apparatus 100, which in turn accelerates the capacity fading of the energy storage apparatus 100, and reduces the cycling performance of the energy storage apparatus 100.

In some embodiments of the present application, the conductivity σ of the electrolytic solution 110 is in the range of 7 ms/cm ≤ σ ≤ 14 ms/cm. Specifically, the conductivity σ of the electrolytic solution 110 may be, but is not limited to, 7 ms/cm, 8 ms/cm, 9 ms/cm, 10 ms/cm, 11 ms/cm, 12 ms/cm, 13 ms/cm, or 14 ms/cm.

When the conductivity σ of the electrolytic solution 110 is in the range of 7 ms/cm ≤ σ ≤ 14 ms/cm, the conductivity of the electrolytic solution 110 is within a reasonable range, so that electrolyte cations deintercalated from the positive electrode sheet 130 can be intercalated into the negative electrode sheet 150 in time. Therefore, the energy storage apparatus 100 has good charging/discharging performance and cycling performance. When the conductivity σ of the electrolytic solution 110 is greater than 14 ms/cm, the viscosity or molar concentration of the electrolytic solution 110 is too high, which increases the production cost of the energy storage apparatus 100. When the conductivity σ of the electrolytic solution 110 is lower than 7 ms/cm, the conductivity of the electrolytic solution 110 is too low, so that the migration speed of electrolyte cations in the electrolytic solution 110 is too low, and electrolyte cations deintercalated from the positive electrode cannot be intercalated into the negative electrode in time, thereby leading to lithium precipitation in the energy storage apparatus 100, which in turn accelerates the capacity fading of the energy storage apparatus 100.

In some embodiments of the present application, the molar concentration C of the electrolyte in the electrolytic solution 110 is in the range of 0.6 mol/L ≤ C ≤ 1.5 mol/L. Specifically, the molar concentration C of the electrolyte may be, but is not limited to, 0.6 mol/L, 0.7 mol/L, 0.8 mol/L, 0.9 mol/L, 1.0 mol/L, 1.1 mol/L, 1.2 mol/L, 1.4 mol/L, or 1.5 mol/L.

When the molar concentration C of the electrolyte in the electrolytic solution 110 is in the range of 0.6 mol/L ≤ C ≤ 1.5 mol/L, the molar concentration C of the electrolyte in the electrolytic solution 110 is in a reasonable range, so that the viscosity and the conductivity of the electrolytic solution 110 are in reasonable ranges. The resistance to the migration of electrolyte cations in the electrolytic solution 110 is low, and electrolyte cations deintercalated from the positive electrode can be intercalated into the negative electrode in time. Therefore, the energy storage apparatus 100 has good rate performance and high charging/discharging efficiency. When the molar concentration C of the electrolyte is greater than 1.5 mol/L, the viscosity of the electrolytic solution 110 increases accordingly, thereby increasing the resistance to the migration of electrolyte cations in the electrolytic solution 110, and decreasing the charging/discharging efficiency of the energy storage apparatus 100. In addition, the molar concentration of the electrolyte is too high, thereby increasing the production cost of the energy storage apparatus 100. When the molar concentration C of the electrolyte is lower than 0.6 mol/L, the molar concentration of the electrolyte in the electrolytic solution 110 is too low, and the amount of electrolyte cations, i.e. lithium ions, in the electrolytic solution 110 is too low, which in turn leads to decrease of the conductivity of the electrolytic solution 110. Electrolyte cations deintercalated from the positive electrode are difficult to be intercalated into the negative electrode in time, which leads to lithium precipitation in the energy storage apparatus 100, which in turn accelerates the capacity fading of the energy storage apparatus 100.

In some embodiments, after the energy storage apparatus 100 is charged and discharged for a predetermined number of cycles at a rate of 1C, in the energy storage apparatus 100, the viscosity ε of the electrolytic solution 110 is in the range of 1.5 Pa's ≤ ε ≤ 2.2 Pa·s, the diffusion coefficient D of electrolyte cations in the electrolytic solution 110 satisfies -23 m²/s ≤ InD ≤ -21 m²/s, the conductivity σ of the electrolytic solution 110 is in the range of 8.5 ms/cm ≤ σ ≤ 13 ms/cm, and the molar concentration C of the electrolyte in the electrolytic solution 110 is in the range of 0.6 mol/L ≤ C ≤ 2mol/L; in which the predetermined number of cycles is in the range of 1000 to 5000.

In an embodiment of the present application, after the energy storage apparatus 100 is charged and discharged for a predetermined number of cycles at a rate of 1C, the viscosity ε of the electrolytic solution 110 in the energy storage apparatus 100, the diffusion coefficient D of electrolyte cations in the electrolytic solution 110, the conductivity σ of the electrolytic solution 110 and the molar concentration C of the electrolyte in the electrolytic solution 110 are all within reasonable ranges, so that the energy storage apparatus 100 has a good dynamic factor, and therefore the energy storage apparatus 100 has good dynamic performances such as low-temperature performance and cycling performance.

Optionally, the predetermined number of cycles of the energy storage apparatus 100 may be, but is not limited to, 1000, 1500, 2000, 2500, 2800, 3000, 3500, 4000, 4500, or 5000. The energy storage apparatus 100 is charged and discharged for a predetermined number of cycles at a cycling rate of 1C, that is, the energy storage apparatus 100 is subjected to a complete charging and discharging process for a predetermined number of times at a cycling rate of 1C. For example, when the predetermined number of cycles of the energy storage apparatus 100 is 1000, the energy storage apparatus 100 is subjected to a complete charging and discharging process for 1000 times at a cycling rate of 1C; when the predetermined number of cycles of the energy storage apparatus 100 is 2500, the energy storage apparatus 100 is subjected to a complete charging and discharging process for 2500 times at a cycling rate of 1C; and when the predetermined number of cycles of the energy storage apparatus 100 is 5000, the energy storage apparatus 100 is subjected to a complete charging and discharging process for 5000 times at a cycling rate of 1C.

Specifically, the viscosity ε of the electrolytic solution 110 may be, but is not limited to, 1.5 Pa's, 1.53 Pa·s, 1.6 Pa's, 1.65 Pa's, 1.7 Pa's, 1.8 Pa's, 1.9 Pa's, 2.0 Pa's, 2.1 Pa's, or 2.2 Pa·s.

Specifically, InD of the electrolytic solution 110 may be, but is not limited to, -23 m²/s, -22.8 m²/s, -22.4 m²/s, -22 m²/s, -21.9 m²/s, -21.7 m²/s, -21.5 m²/s, -21.3 m²/s, -21.1 m²/s, or -21 m²/s.

Specifically, the conductivity σ of the electrolytic solution 110 may be, but is not limited to, 8.5 ms/cm, 9 ms/cm, 9.5 ms/cm, 10 ms/cm, 11 ms/cm, 11.5 ms/cm, 12 ms/cm, or 13 ms/cm.

Specifically, the molar concentration C of the electrolyte in the electrolytic solution 110 may be, but is not limited to, 0.6 mol/L, 0.8 mol/L, 0.9 mol/L, 1.1 mol/L, 1.3 mol/L, 1.5 mol/L, 1.7 mol/L, 1.8 mol/L, 1.9 mol/L, or 2 mol/L.

The energy storage apparatus 100 of the present application will be further described in the following through specific examples.

### Examples 1 to 10 and Comparative Examples 1 and 2

The energy storage apparatuses 100 of Examples 1 to 10 and Comparative Examples 1 and 2 were prepared by the following steps:
1) Preparation of the positive electrode sheet 130:
   A positive electrode active material (lithium iron phosphate), a first conductive agent (conductive carbon black, Super P), and a first binder (polyvinylidene fluoride, PVDF) were dispersed in N-methyl pyrrolidone solvent (NMP) at a mass ratio of 96.5:1:2.5 and mixed uniformly to prepare a positive electrode slurry. The positive electrode slurry was coated on a positive electrode current collector 133 (aluminum sheet) to form a positive electrode active material layer 131, the coating weight of the positive electrode slurry being 0.320 g / 1540.25 mm². The positive electrode sheet 130 was obtained after drying, cold pressing, splitting, and cutting.
2) Preparation of the negative electrode sheet 150:
   A negative electrode active material (graphite), a second conductive agent (conductive carbon black, Super P), a thickening agent (sodium carboxymethyl cellulose (CMC)), a second binder (styrene-butadiene rubber, SBR) were dispersed in de-ionized water at a mass ratio of 96.5:0.5:1:2 and mixed uniformly to prepare a negative electrode slurry. The negative electrode slurry was coated on a negative electrode active current collector (copper sheet) to form a negative electrode active material layer 151, the coating weight of the negative electrode slurry being 0.153 g / 1540.25 mm². The negative electrode sheet 150 was obtained after drying, cold pressing, splitting, and cutting.
3) Preparation of the separator 140:
   A 16 um polyethylene film was used as the separator 140.
4) Preparation of the electrolytic solution 11:
   The electrolytic solutions 110 of Examples 1 to 10 and Comparative Examples 1 and 2 comprised a solvent, an electrolyte and an additive. In a glove box under an argon atmosphere having a moisture content of ≤ 1 ppm, ethylene carbonate (EC), methyl ethyl carbonate (EMC) and dimethyl carbonate (DMC) were mixed at a mass ratio of 1: 1:2. Then, a dry electrolyte, i.e. lithium hexafluorophosphate, was dissolved in the solvent, and stirred until completely dissolved. Additives, i.e. vinylene carbonate and fluoroethylene carbonate, were added, and mixed uniformly to give the electrolytic solution 110. In the electrolytic solution 110, the molar concentration of the electrolyte was 1 mol/L, the mass content of the additive ethylene carbonate was 2%, and the mass content of the additive fluoroethylene carbonate was 1.5%. For the performance parameters of the electrolytic solutions 110 of Examples 1 to 10 and Comparative Examples 1 and 2, see the following Table 1.
5) Preparation of the energy storage apparatus 100:
   The above positive electrode sheet 130, separator 140, and negative electrode sheet 150 were sequentially stacked so that the separator 140 was located between the positive electrode sheet 130 and the negative electrode sheet 150, and wound to give the jelly roll. The jelly roll was placed in the outer packaging shell, and after drying, the electrolytic solutions 110 of Examples 1 to 10 and Comparative Examples 1 and 2 were injected respectively. The energy storage apparatuses 100 of Examples 1 to 10 and Comparative Examples 1 and 2 were obtained after vacuum packaging, standing, formation and shaping.

The performance parameters of the electrolytic solutions 110 of Examples 1 to 10 and Comparative Examples 1 and 2 prepared according to the above steps were tested as follows. The viscosity of the electrolytic solution 110 was tested by using a Ubbelohde viscometer. The diffusion coefficient D of the electrolytic solution 110 was tested by using nuclear magnetic resonance lithium spectrum. The conductivity was tested by using a conductivity meter. The performance parameters of the electrolytic solutions 110 of Examples 1 to 10 and Comparative Examples 1 and 2 are shown in Table 1. The electrolytic solutions 110 satisfy the formula α = k1 × ε × InD + k2 × σ × T / 100C, in which k1 = 500 Pa·m², and k2 = 1 K·mol/(s·cm²).

**Table 1: Performance parameters of the electrolytic solutions 110 of Examples 1 to 10 and Comparative Examples 1 and 2**

| Examples | ε/(Pa·s) | LnD/(m²/s) | σ/(ms/cm) | C/(mol/L) | T/(K) | α |
|---|---|---|---|---|---|---|
| Ex. 1 | 2.1×10⁻³ | -23.01 | 10.87 | 1 | 298.15 | 8.25 |
| Ex. 2 | 2.05×10⁻³ | -21.94 | 10.21 | 0.9 | 298.15 | 11.34 |
| Ex. 3 | 1.61×10⁻³ | -18.93 | 8.14 | 0.6 | 298.15 | 25.21 |
| Ex. 4 | 2.45×10⁻³ | -21.06 | 12.8 | 1.5 | 298.15 | -0.35 |
| Ex. 5 | 2.0×10⁻³ | -20.64 | 9.85 | 1 | 298.15 | 8.73 |
| Ex. 6 | 2.05×10⁻³ | -20.13 | 11.35 | 1 | 298.15 | 13.21 |
| Ex. 7 | 1.92×10⁻³ | -21.70 | 10.11 | 1 | 298.15 | 9.31 |
| Ex. 8 | 2.21×10⁻³ | -14.72 | 11.66 | 1.2 | 298.15 | 12.71 |
| Ex. 9 | 1.85×10⁻³ | -21.00 | 9.95 | 0.8 | 298.15 | 17.66 |
| Ex. 10 | 2.35×10⁻³ | -24.01 | 11.22 | 1.4 | 298.15 | -4.31 |
| Comp. Ex. 1 | 2.78×10⁻³ | -25.44 | 12.6 | 1.5 | 298.15 | -10.31 |
| Comp. Ex. 2 | 1.54× 10⁻³ | -12.10 | 7.98 | 0.6 | 298.15 | 30.34 |

### Testing of the performance of the energy storage apparatus 100

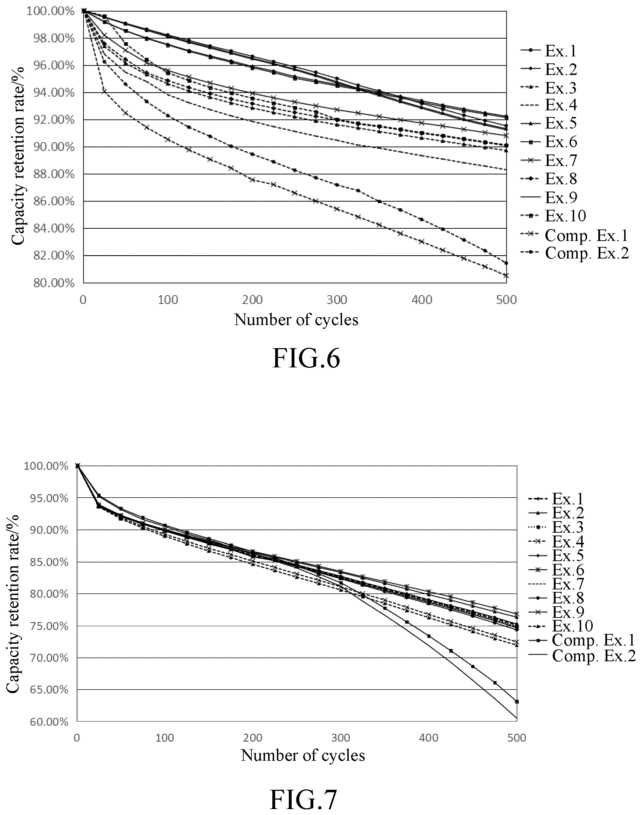

1. The energy storage apparatuses 100 of Examples 1 to 10 and Comparative Examples 1 and 2 were tested for their cycling performance. The capacity retention rates of the energy storage apparatuses 100 of Examples 1 to 10 and Comparative Examples 1 and 2 after 500 cycles were tested. Specifically, the energy storage apparatuses 100 of Examples 1 to 10 and Comparative Examples 1 and 2 were placed respectively on a charging and discharging instrument for performing the charging and discharging cycling test. The charging voltage was set in a range of from 2.5V to 3.65V (such as 3V). For each of the energy storage apparatuses 100 of the Examples and the Comparative Examples, the capacity retention rate at a cycling rate of 1C and temperatures of 298.15K, 318.15K and 253.15K were tested respectively; and the capacity retention rate at a cycling rate of 3C and a temperature of 298.15K were tested respectively. The capacity retention rate of each of the energy storage apparatuses 100 of the Examples and the Comparative Examples after n cycles was calculated according to the following formula: the capacity retention rate after n cycles = (the discharge capacity after n cycles / the discharge capacity after the first cycle) × 100%.
   The results of the capacity retention rates of the energy storage apparatuses 100 of Examples 1 to 10 and Comparative Examples 1 and 2 after 500 cycles are shown in Table 2. The dependences of the capacity retention rate on the number of cycles for the energy storage apparatuses 100 of Examples 1 to 10 and Comparative Examples 1 and 2 at a temperature of 298.15K and a rate of 1C (i.e. 298.15K/1C), at a temperature of 318.15K and a rate of 1C (i.e. 318.15K/1C), at a temperature of 253.15K and a rate of 1C (i.e. 253.15K/1C), and at a temperature of 298.15K and a rate of 3C (i.e. 298.15K/3C) are shown in Figs. 5 to 8.
2. The energy storage apparatuses 100 of Examples 1 to 10 and Comparative Examples 1 and 2 were tested for their cycling performance. The capacity retention rates of the energy storage apparatuses 100 of Examples 1 to 10 and Comparative Examples 1 and 2 after 1500 cycles were tested. Specifically, the energy storage apparatuses 100 of Examples 1 to 10 and Comparative Examples 1 and 2 were placed respectively on a charging and discharging instrument for performing the charging and discharging cycling test. The charging voltage was set in a range of from 2.5V to 3.65V (such as 3V). For each of the energy storage apparatuses 100 of the Examples and the Comparative Examples, the capacity retention rate at a cycling rate of 1C and temperatures of 298.15K and 318.15K were tested respectively.

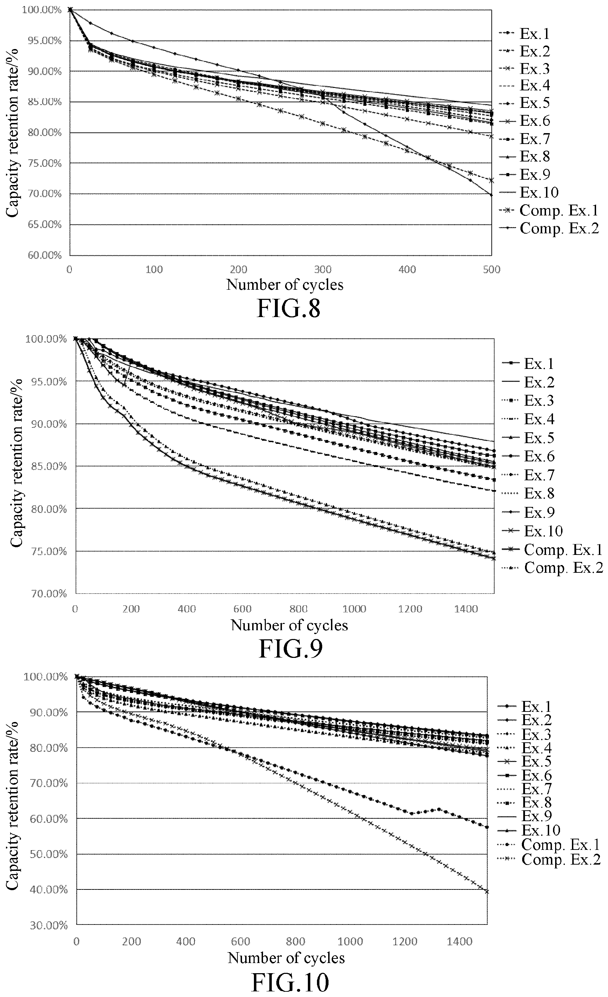

The results of the capacity retention rates of the energy storage apparatuses 100 of Examples 1 to 10 and Comparative Examples 1 and 2 after 1500 cycles are shown in Table 3. The dependences of the capacity retention rate on the number of cycles for the energy storage apparatuses 100 of Examples 1 to 10 and Comparative Examples 1 and 2 at a temperature of 298.15K and a rate of 1C (i.e. 298.15K/1C), and at a temperature of 318.15K and a rate of 1C (i.e. 318.15K/1C) are shown in Figs. 9 to 10.

**Table 2: Results of the capacity retention rates of the energy storage apparatuses 100 of Examples 1 to 10 and Comparative Examples 1 and 2 after 500 cycles**

| | Capacity retention rate after 500 cycles | | | |
|---|---|---|---|---|
| | 298.15K/1C | 318.15K/1C | 253.15K/1C | 298.15K/3C |
| Ex. 1 | 93.8% | 91.5% | 75.1% | 82.7% |
| Ex. 2 | 94.1% | 92.2% | 76.3% | 83.1% |
| Ex. 3 | 91.2% | 89.7% | 74.8% | 79.3% |
| Ex. 4 | 89.6% | 88.3% | 72.4% | 83.2% |
| Ex. 5 | 93.7% | 91.3% | 75.2% | 82.0% |
| Ex. 6 | 94.5% | 92.1% | 76.8% | 83.5% |
| Ex. 7 | 92.3% | 90.8% | 74.7% | 81.4% |
| Ex. 8 | 92.1% | 90.6% | 74.3% | 81.6% |
| Ex. 9 | 93.4% | 91.2% | 74.6% | 83.1% |
| Ex. 10 | 89.3% | 90.1% | 71.9% | 84.4% |
| Comp. Ex. 1 | 83.6% | 80.5% | 63.1% | 72.1% |
| Comp. Ex. 2 | 84.5% | 81.4% | 60.5% | 69.7% |

**Table 3: Results of the capacity retention rates of the energy storage apparatuses 100 of Examples 1 to 10 and Comparative Examples 1 and 2 after 1500 cycles**

| | Capacity retention rate after 1500 cycles | |
|---|---|---|
| | 298.15K/1C | 318.15K/1C |
| Ex. 1 | 86.2% | 77.6% |
| Ex. 2 | 87.9% | 83.4% |
| Ex. 3 | 83.4% | 81.0% |
| Ex. 4 | 82.1% | 78.5% |
| Ex. 5 | 85.5% | 79.3% |
| Ex. 6 | 86.8% | 83.1% |
| Ex. 7 | 84.9% | 82.6% |
| Ex. 8 | 84.7% | 81.7% |
| Ex. 9 | 85.29% | 78.91% |
| Ex. 10 | 84.89% | 81.93% |
| Comp. Ex. 1 | 74.1% | 57.5% |
| Comp. Ex. 2 | 74.8% | 39.3% |

Specifically referring to Tables 1 and 2, the kinetic factors α of the electrolytic solutions 110 of Examples 1 to 2 and 5 to 10 are in the range of 0 ≤ α ≤ 10. These electrolytic solutions 110 have suitable viscosity and conductivity, electrolyte cations in the electrolytic solutions 110 have suitable diffusion speed, and the temperatures of the electrolytic solution 110 are also within a reasonable range, so that the resistance to the migration of electrolyte cations in the energy storage apparatus 100 is low, and electrolyte cations in the electrolytic solution 110 can be more efficiently deintercalated and intercalated between the positive electrode sheet 130 and the negative electrode sheet 150. The energy storage apparatuses 100 of Examples 1 to 2 and 5 to 10 all have capacity retention rates of higher than 92% tested after 500 cycles at 298.15K and a rate of 1C; and the energy storage apparatuses 100 of Examples 1 to 2 and 5 to 10 all have capacity retention rates of higher than 84.5% tested after 1500 cycles at 298.15K and a rate of 1C. The energy storage apparatuses 100 have superior capacity retention rate and cycling and rate performances. The kinetic factors α of the electrolytic solutions 110 of Examples 3 and 9 are in the range of 10 ≤ α ≤ 30, and the kinetic factors α of the electrolytic solutions 110 of Examples 4 and 10 are in the range of -10 ≤ α < 0. The electrolytic solutions 110 of the energy storage apparatuses 100 of Examples 3, 4, 9 and 10 have suitable viscosity and conductivity, and the diffusion coefficients of electrolyte cations in the electrolytic solutions 110 and the thermodynamic temperatures of the electrolytic solutions 110 are within reasonable ranges, so that electrolyte cations in the electrolytic solution 110 can be efficiently deintercalated and intercalated. The energy storage apparatuses 100 of Examples 3, 4, 9 and 10 have capacity retention rates in the range of 89%-93.5%, tested after 500 cycles at 298.15K and a rate of 1C. The energy storage apparatuses 100 have good dynamic performances including high capacity retention rate and cycling and rate performances. The energy storage apparatuses 100 of Examples 3, 4, 9 and 10 have capacity retention rates in the range of 82%-85.5%, tested after 1500 cycles at 298.15K and a rate of 1C. The above energy storage apparatuses 100 have good cycling performance.

The kinetic factor α of the electrolytic solution 110 of Comparative Example 1 is lower than -10. The viscosity and the conductivity of the electrolytic solution 110 are too large. The molar concentration of the electrolyte in the electrolytic solution 110 is too large. These increase the resistance to the migration of electrolyte cations in the electrolytic solution 110, reduce the moving speed and diffusion coefficient of electrolyte cations between the positive electrode sheet 130 and the negative electrode sheet 150, which in turn reduces the rate performance of the energy storage apparatuses 100. The energy storage apparatus 100 of Comparative Example 1 has a capacity retention rate of lower than 85%, tested after 500 cycles at 298.15K and a rate of 1C. The energy storage apparatus 100 of Comparative Example 1 has a capacity retention rate of lower than 75%, tested after 1500 cycles at 298.15K and a rate of 1C. Said energy storage apparatus 100 has poor dynamic performance.

The kinetic factor α of the electrolytic solution 110 of Comparative Example 2 is higher than 30. The viscosity and the conductivity of the electrolytic solution 110 are too low. The molar concentration of the electrolyte in the electrolytic solution 110 is too low. The electrolyte provides less electrolyte cations to the electrolytic solution 110. The molar concentration of the electrolyte in the electrolytic solution 110 will be even lower after the energy storage apparatus 100 is subjected to a plurality of charging and discharging processes, which in turn affects the cycling performance of the energy storage apparatus 100. The energy storage apparatus 100 of Comparative Example 2 has a capacity retention rate of lower than 85%, tested after 500 cycles at 298.15K and a rate of 1C. The energy storage apparatus 100 of Comparative Example 2 has a capacity retention rate of lower than 75%, tested after 1500 cycles at 298.15K and a rate of 1C. The energy storage apparatus 100 of Comparative Example 2 has poor dynamic performance.

It can be understood that the kinetic factors α of the electrolytic solutions 110 in the energy storage apparatuses 100 of Examples 1 to 10 are in the range of -10 ≤ α ≤ 30; the energy storage apparatuses 100 of Examples 1 to 10 have capacity retention rates of higher than 89%, tested after 500 cycles at 298.15K and a rate of 1C; and the energy storage apparatuses 100 of Examples 1 to 10 have capacity retention rates of higher than 84.5%, tested after 1500 cycles at 298.15K and a rate of 1C. Therefore, these energy storage apparatuses 100 have good cycling stability. In comparison, the kinetic factors α of the electrolytic solutions 110 in the energy storage apparatuses 100 of Comparative Examples 1 and 2 are not within the range of from -10 to 30; the energy storage apparatuses 100 of Comparative Examples 1 and 2 have capacity retention rates of lower than 85%, tested after 500 cycles at 298.15K and a rate of 1C; and the energy storage apparatuses 100 of Comparative Examples 1 and 2 have capacity retention rates of lower than 75%, tested after 1500 cycles at 298.15K and a rate of 1C. Therefore, the energy storage apparatuses 100 of Comparative Examples 1 and 2 have poor cycling stability.

Specifically referring to Tables 1 and 2, the energy storage apparatuses 100 of Examples 1 to 10 and Comparative Examples 1 and 2 were tested at a rate of 1C, and the temperatures were set to 253.15 K, 298.15K and 318.15K, respectively. As the test temperature increases, the capacity retention rate of the energy storage apparatuses 100 of Examples 1 to 10 and Comparative Examples 1 and 2 after 500 cycles first increases then decreases. When the test temperature is 298.15K, the energy storage apparatus 100 has the best dynamic performance. When the test temperature is 318.15K, the temperature of the electrolytic solution 110 in the energy storage apparatus 100 is too high, which increases the risk of oxidation and damage of separator 140, and the energy storage apparatus 100 has a poor cycling performance. When the test temperature is 253.15K, the temperature of the electrolytic solution 110 in the energy storage apparatus 100 is too low, and the conductivity of the energy storage apparatus 100 is too low, so that electrolyte cations deintercalated from the positive electrode are difficult to be intercalated into the negative electrode in time, leading to lithium precipitation in the energy storage apparatus 100, which in turn reduces the capacity retention rate of the energy storage apparatus 100. In addition, when the test temperature is 253.15K, the capacity retention rates of the energy storage apparatuses 100 of Examples 1 to 10 after 500 cycles are higher than 70%, while those of Comparative Examples are lower than 65%. The kinetic factors α of the electrolytic solutions 110 of Examples 1 to 10 are in the range of -10 ≤ α ≤ 30, and the energy storage apparatuses 100 can still maintain a certain capacity retention rate even under a low temperature. Accordingly, the energy storage apparatuses 100 of Examples 1 to 10 have good low-temperature performance. When the test temperature is 318.15K, the capacity retention rates of the energy storage apparatuses 100 of Examples 1 to 10 after 500 cycles are all higher than 88%, while those of Comparative Examples 1 and 2 are lower than 82%. The kinetic factors α of the electrolytic solutions 110 of Examples 1 to 10 are in the range of -10 ≤ α ≤ 30, and the energy storage apparatus 100 can still maintain superior capacity retention rate even under a high temperature. Accordingly, the energy storage apparatuses 100 of Examples 1 to 10 have good high-temperature performance.

Specifically referring to Tables 1 and 2, the energy storage apparatuses 100 of Examples 1 to 10 and Comparative Examples 1 and 2 were tested for their capacity retention rates after 500 cycles at a test temperature of 298.15K and at rates of 1C and 3C, respectively. The capacity retention rates of the energy storage apparatuses 100 of Examples 1 to 10 and Comparative Examples 1 and 2 determined at a test temperature of 298.15K and a rate of 1C are all higher than those determined at a test temperature of 298.15K and a rate of 3C. Among these, the energy storage apparatuses 100 of Examples 1 to 10 still give capacity retention rates higher than 79% at a test temperature of 298.15K and a rate of 3C, while the energy storage apparatuses 100 of Comparative Examples 1 and 2 give capacity retention rates far lower than 75% at a test temperature of 298.15K and a rate of 3C. The kinetic factors α of the electrolytic solutions 110 of Examples 1 to 10 are in the range of -10 ≤ α ≤ 30, and therefore, the energy storage apparatuses 100 of Examples 1 to 10 have high rate performance.

Specifically referring to Figs. 5 to 8, in the energy storage apparatuses 100 of Examples 1 to 10 and Comparative Examples 1 and 2, the capacity retention rate of the energy storage apparatus 100 continuously decreases when the number of cycles continuously increases. Under the same test conditions, the capacity retention rates of the energy storage apparatuses 100 of Examples 1 to 10 are higher than those of Comparative Examples 1 and 2. The kinetic factors α of the electrolytic solutions 110 in the energy storage apparatuses 100 of Examples 1 to 10 are in the range of -10 ≤ α ≤ 30, and the viscosity, the conductivity, the diffusion coefficient of electrolyte cations, and the thermodynamic temperature of the electrolytic solutions 110 of Examples 1 to 10 are within reasonable ranges, so that the energy storage apparatuses 100 of Examples 1 to 10 have high capacity retention rates. In comparison, the kinetic factors α of the electrolytic solutions 110 in the energy storage apparatuses 100 of Comparative Examples 1 and 2 do not are not in the range of -10 ≤ α ≤ 30, so that the capacity retention rates of the energy storage apparatuses 100 of Comparative Examples 1 and 2 are low.

In summary, the kinetic factors α of the electrolytic solutions 110 in the energy storage apparatuses 100 of Examples 1 to 10 satisfy the following formula: α = k1 × ε × InD + k2 × σ × T / 100C, and the values of α are within the range of -10 ≤ α ≤ 30. The viscosity, the conductivity, the diffusion coefficient of electrolyte cations, and the thermodynamic temperature of the electrolytic solutions 110 of Examples 1 to 10 are within reasonable ranges. Electrolyte cations in the electrolytic solution 110 can be efficiently deintercalated and intercalated. Accordingly, the energy storage apparatuses 100 of Examples 1 to 10 have good cycling stability and low-temperature performance and high rate performance. In comparison, the kinetic factors α in Comparative Examples 1 and 2 are not in the range of -10 ≤ α ≤ 30. In the energy storage apparatuses 100 provided in Comparative Examples 1 and 2, electrolyte cations are difficult to be deintercalated and intercalated with high efficiency. The energy storage apparatuses 100 of Comparative Examples 1 and 2 have poor cycling stability and rate performance.

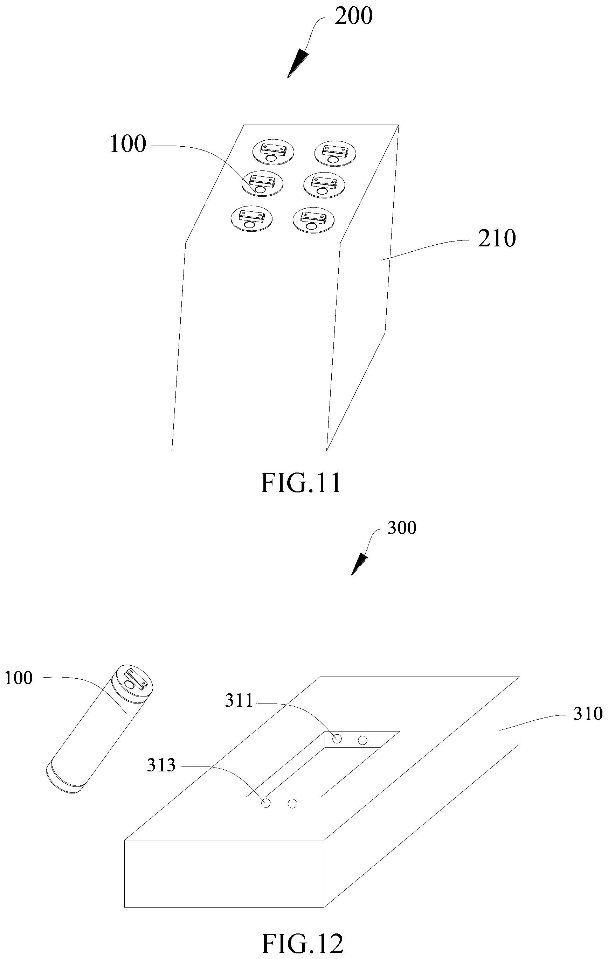

Referring to Fig. 11, the present application further provides an energy storage system 200, which comprises a box 210 and an energy storage apparatus 100 provided in the present application. A plurality of the energy storage apparatuses 100 are contained in the box 210, and are electrically connected. The mode of the electrical connection of the plurality of energy storage apparatuses 100 includes at least one of series connection and parallel connection. Since the energy storage system 200 of the present application comprises a plurality of energy storage apparatuses 100 having superior dynamic performance, the energy storage system 200 also has superior dynamic performance.

It can be understood that a plurality of energy storage apparatuses 100 of the energy storage system 200 can be connected in parallel with each other; or connected in series with each other; or partially connected in parallel and partially connected in series (i.e. mixed connection). The mode of connection of a plurality of energy storage apparatuses 100 in a same energy storage system 200 is not limited in the present application.

It can be understood that in some embodiments, the box 210 of each energy storage system 200 contains one energy storage apparatus 100. In other embodiments, the box 210 of each energy storage system 200 contains a plurality of energy storage apparatuses 100.

It can be understood that the energy storage system 200 described in the present embodiment is only one form of the energy storage system 200 in which the energy storage apparatus 100 is used, and should not be understood as a limitation to the energy storage system 200 provided in the present application, or a limitation to the energy storage apparatus 100 provided in various embodiments of the present application.

Referring to Fig. 12, the present application further provides an electric device 300, which comprises an electric device body 310 and an energy storage apparatus 100 provided in the present application. The electric device body 310 comprises a device positive electrode 311 and a device negative electrode 313. The positive electrode sheet 130 of the energy storage apparatus 100 is electrically connected with the device positive electrode 311 of the electric device body 310. The negative electrode sheet 150 of the energy storage apparatus 100 is electrically connected with the device negative electrode 313 of the electric device body 310. The energy storage apparatus 100 is used to supply power to the electric device body 310. Since the electric device 300 is powered by the energy storage apparatus 100 having superior dynamic performance, the electric device 300 can work stably.

In some embodiments, the electric device 300 is an electric vehicle or a hybrid electric vehicle. Since the electric vehicle or hybrid electric vehicle is powered by the energy storage apparatus 100 having superior dynamic performance, the electric vehicle or hybrid electric vehicle can work stably.

In some other embodiments, the electric device 300 may be a portable electronic device such as a mobile phone, a tablet computer, a notebook computer, a desktop computer, an intelligent toy, a smart bracelet, a smart watch, an electronic reader, a game console, and a toy. In some other embodiments, the electric device 300 may also be a large device such as an electric cart, a ship, or a spacecraft.

It can be understood that the electric device 300 described in the present embodiment is only one form of the electric device 300 in which the energy storage apparatus 100 is used, and should not be understood as a limitation to the electric device 300 provided in the present application, or a limitation to the energy storage apparatus 100 provided in various embodiments of the present application.

The reference in this application to "embodiment" or "embodiments" means that the particular features, structures or characteristics described in connection with the embodiment or embodiments may be included in at least one embodiment of the present application. The appearance of the phrase at various locations in the description does not necessarily mean the same embodiment, nor is it an independent or alternative embodiment that is mutually exclusive with other embodiments. A person skilled in the art will understand explicitly and implicitly that an embodiment described herein may be combined with other embodiments. In addition, it should also be understood that the features, structures or characteristics described in various embodiments of the present application may be combined arbitrarily to form yet another embodiment without departing from the spirit and scope of the technical solution of the present application.

Finally, it should be noted that the above embodiments are only used to illustrate, not to limit, the technical solution of the present application. Although the present application is described in detail with reference to the above preferred embodiments, it should be understood by a person skill in the art that the technical solution of the present application can be modified or equivalently replaced without departing from the spirit and scope of the technical solution of the present application.

## Claims

1. An energy storage apparatus, comprising:
an electrolytic solution, which has a kinetic factor α satisfying the following formula: α = k1 × ε × InD + k2 × σ × T / 100C, wherein the kinetic factor α of the electrolytic solution is in the range of -10 ≤ α ≤ 30, ε is viscosity of the electrolytic solution, D is diffusion coefficient of electrolyte cations in the electrolytic solution, σ is conductivity of the electrolytic solution, T is thermodynamic temperature of the electrolytic solution, C is molar concentration of electrolyte in the electrolytic solution, k1 is viscosity correction coefficient of the electrolytic solution, k2 is conductivity correction coefficient of the electrolytic solution;
a positive electrode sheet, which is at least partially immersed in the electrolytic solution;
a separator, which is arranged on one side of the positive electrode sheet and at least partially immersed in the electrolytic solution; and
a negative electrode sheet, which is arranged on a side of the separator facing away from the positive electrode sheet and at least partially immersed in the electrolytic solution.

2. The energy storage apparatus according to claim 1, wherein the thermodynamic temperature T of the electrolytic solution is in the range of 243.15K ≤ T ≤ 333.15K; before formation of the energy storage apparatus, the viscosity correction coefficient k1 of the electrolytic solution is in the range of 100 Pa·m² ≤ k1 ≤ 800 Pa·m², and the conductivity correction coefficient k2 of the electrolytic solution is in the range of 0.2 K·mol/(s·\cm²) ≤ k2 ≤ 1.6 K·mol/(s·cm²); and after formation of the energy storage apparatus, the viscosity correction coefficient k1 of the electrolytic solution is in the range of 300 Pa·m² ≤ k1 ≤ 1000 Pa·m², and the conductivity correction coefficient k2 of the electrolytic solution is in the range of 0.5 K·mol/(s·\cm²) ≤ k2 ≤ 2.0 K·mol/(s·cm²).

3. The energy storage apparatus according to claim 1 or 2, wherein, when the thermodynamic temperature T of the electrolytic solution in the energy storage apparatus satisfies 243.15K ≤ T ≤ 333.15K, and the energy storage apparatus is charged/discharged for a predetermined number of cycles at a predetermined cycling rate, the viscosity correction coefficient k1 of the electrolytic solution is 500 Pa·m², the conductivity correction coefficient k2 of the electrolytic solution is 1 K·mol/(s cm²), the predetermined number of cycles ranges from 500 to 10000, and the predetermined cycling rate ranges from 0.5C to 3C.

4. The energy storage apparatus according to any one of claims 1-3, wherein the kinetic factor α of the electrolytic solution is in the range of 0 ≤ α ≤ 15.

5. The energy storage apparatus according to any one of claims 1-4, wherein the viscosity ε of the electrolytic solution is in the range of 1.8 Pa·s ≤ ε ≤ 2.5Pa's.

6. The energy storage apparatus according to any one of claims 1-5, wherein the diffusion coefficient D of electrolyte cations in the electrolytic solution satisfies -25 m²/s ≤ lnD ≤ -18m²/s.

7. The energy storage apparatus according to any one of claims 1-6, wherein the conductivity σ of the electrolytic solution is in the range of 7 ms/cm ≤ σ ≤ 14ms/cm.

8. The energy storage apparatus according to any one of claims 1-7, wherein the molar concentration of the electrolyte in the electrolytic solution is in the range of 0.6 mol/L ≤ C ≤ 1.5 mol/L.

9. The energy storage apparatus according to any one of claims 1-8, wherein the electrolytic solution comprises an electrolyte, a solvent and an additive, wherein the electrolyte comprises at least one of lithium hexafluorophosphate, lithium bis(trifluoromethylsulfonyl)imide, lithium difluorosulfonimide, lithium tetrafluoroborate, lithium bis(oxalate)borate or lithium difluorooxalateborate; the solvent comprises at least one of dimethyl carbonate, diethyl carbonate, methyl ethyl carbonate, ethylene carbonate, propylene carbonate, methyl acetate, ethyl acetate, ethyl propionate, propyl propionate, ethyl butyrate, sulfolane or dimethyl sulfoxide; and the additive comprises at least one of fluoroethylene carbonate, vinylene carbonate, ethylene sulfate, ethylene sulfite, tris(trimethylsilane)phosphate, tris(trimethylsilane)borate or 1,3-propanesultone.

10. The energy storage apparatus according to any one of claims 1-9, wherein after the energy storage apparatus is charged/discharged for a predetermined number of cycles at a cycling rate of 1C, in the energy storage apparatus, the viscosity ε of the electrolytic solution is in the range of 1.5 Pa·s ≤ ε ≤ 2.2 Pa·s, the diffusion coefficient D of electrolyte cations in the electrolytic solution satisfies -23 m²/s ≤ InD ≤ -21 m²/s, the conductivity σ of the electrolytic solution is in the range of 8.5 ms/cm ≤ σ ≤ 13 ms/cm, and the molar concentration C of the electrolyte in the electrolytic solution is in the range of 0.6 mol/L ≤ C ≤ 2mol/L; in which the predetermined number of cycles is in the range of 1000 to 5000.

11. An energy storage system, which comprises:
a box; and
a plurality of the energy storage apparatuses according to any one of claims 1-10, wherein the energy storage apparatuses are contained in the box, and are electrically connected, and the mode of the electric connection of the energy storage apparatuses includes at least one of series connection or parallel connection.

12. An electric device, which comprises:
an electric device body comprising a device positive electrode and a device negative electrode; and
an energy storage apparatus according to any one of claims 1-10, wherein the positive electrode sheet of the energy storage apparatus is electrically connected with the device positive electrode of the electric device body; the negative electrode sheet of the energy storage apparatus is electrically connected with the device negative electrode of the electric device body; and the energy storage apparatus is used for supplying power to the electric device body.
